# EUROPÄISCHE PATENTANMELDUNG

(11) **EP 2 930 088 A1**
(43) Veröffentlichungstag der Anmeldung: **14.10.2015**
(21) Anmeldenummer: 15162727.0
(22) Anmeldetag: 08.04.2015
(51) Int. Cl.: B62D 55/26

(54) **FAHRWERK, KETTENFAHRZEUG UND UNTERFAHRZEUG MIT DEMSELBEN UND FAHRZEUG MIT EINEM DERARTIGEN KETTENFAHRZEUG BZW. UNTERFAHRZEUG**

(30) Priorität: 09.04.2014 DE 102014005203
(71) Anmelder: BIBA Bremer Institut für Produktion und Logistik GmbH, 28359 Bremen (DE)
(72) Erfinder: Uriarte, Claudio, 28205 Bremen (DE)
(74) Vertreter: Manasse, Uwe

(57) **Zusammenfassung**

Vorzugsweise nachrüstbares Fahrwerk für ein Kettenfahrzeug oder ein Unterfahrzeug, umfassend einen Fahrwerkträger mit mindestens einem daran gelagerten Antriebsrad und mindestens einem daran gelagerten Umlenkrad ein endloses Antriebselement, das um das mindestens eine Antriebsrad und das mindestens eine Umlenkrad läuft und auf dessen Außenfläche Rollen schräg zur Laufrichtung des Antriebselements passiv gelagert montiert sind, und einen Antrieb zum Antreiben des mindestens einen Antriebsrads, Kettenfahrzeug oder Unterfahrzeug mit mindestens zwei derartigen Fahrwerken und Fahrzeug mit mindestens einem derartigen Kettenfahrzeug oder Unterfahrzeug.

## Beschreibung

Die vorliegende Erfindung betrifft ein vorzugsweise nachrüstbares Fahrwerk für ein Kettenfahrzeug bzw. Unterfahrzeug, ein Kettenfahrzeug oder Unterfahrzeug sowie ein Fahrzeug, insbesondere Baufahrzeug mit mindestens einem Werkzeug, Fahrzeug für landwirtschaftliche Zwecke und Roboterplattform. Das Fahrwerk kann auch als ein Fahrschiff bezeichnet werden, das Unterfahrzeug kann auch als ein Unterwagen bezeichnet werden und das Kettenfahrzeug kann auch als ein Raupenfahrzeug bezeichnet werden.

Ein Kettenfahrzeug oder Raupenfahrzeug ist ein Kraftfahrzeug, das auf selbst mitgeführten Fahrketten fährt. Diese bilden zusammen mit dem Antriebsstrang und dem Fahrwerkträger sein Kettenlaufwerk.

Durch die große Kontaktfläche zwischen Fahrzeug und Boden weisen Kettenlaufwerke die folgenden Vorteile auf:
- Geringer Bodendruck
- Schonung des Bodens, da keine Bodenverdichtung
- Schwere Maschinen sinken auf weichem Boden nicht ein
- Bessere Kraftübertragung auf den Boden

Mit hoher Spurhaltigkeit geht jedoch der Nachteil einer erschwerten Lenkbarkeit einher.

Der vorliegenden Erfindung liegt somit die Aufgabe zugrunde, ein Fahrzeug mit omnidirektionalen Fähigkeiten für Offroad-Anwendungen bereitzustellen.

Erfindungsgemäß wird diese Aufgabe gelöst durch ein vorzugsweise nachrüstbares Fahrwerk für ein Kettenfahrzeug oder ein Unterfahrzeug, umfassend einen Fahrwerkträger mit mindestens einem daran gelagerten Antriebsrad und mindestens einem daran gelagerten Umlenkrad, ein endloses Antriebselement, das um das mindestens eine Antriebsrad und das mindestens eine Umlenkrad läuft und auf dessen Außenfläche Rollen schräg zur Laufrichtung des Antriebselements passiv gelagert montiert sind, und einen Antrieb zum Antreiben des mindestens einen Antriebsrads. Ein solches Fahrwerk kann zum Beispiel bei Baufahrzeugen bzw. bei Baumaschinen beim Bau derselben oder aber zur Umrüstung zum Einsatz kommen, um ein Baufahrzeug bzw. eine Baumaschine mit omnidirektionalen Fähigkeiten zu versehen. Je nach Orientierung der Rollen werden die omnidirektionalen Eigenschaften des Kettenfahrzeugs beeinflusst.

Des Weiteren wird diese Aufgabe gelöst durch ein Kettenfahrzeug oder Unterfahrzeug, umfassend einen Fahrzeugrahmen und mindestens zwei daran montierte Fahrwerke nach einem der Ansprüche 1 bis 4, wobei die Laufrichtungen der Antriebselemente der Fahrwerke parallel sind und zumindest ein Teil der Rollen eines Fahrwerkes entgegengesetzt oder spiegelbildlich zu zumindest einem Teil der Rollen eines benachbarten Fahrwerks orientiert ist. Der Fahrzeugrahmen kann auch als ein Fahrzeugchassis bezeichnet werden.

Weiterhin wird diese Aufgabe auch durch einen Fahrzeug, insbesondere Baufahrzeug mit mindestens einem Werkzeug, Fahrzeug für landwirtschaftliche Zwecke und Roboterplattform, umfassend ein Kettenfahrzeug oder Unterfahrzeug nach Anspruch 5 oder 6 mit mindestens vier, vorzugsweise genau vier, Fahrwerken nach einem der Ansprüche 1 bis 4 gelöst.

Gemäß einer besonderen Ausführungsform der vorliegenden Erfindung ist das Antriebselement des Fahrwerks eine Kette, insbesondere aus Gummi oder Stahl, eine Raupe oder ein Gurt. Bei der Kette kann es sich beispielsweise um eine Gleis- oder Gummikette handeln.

Vorteilhafterweise ist der Antrieb ein hydraulischer oder elektrischer Antrieb.

Darüber hinaus kann vorgesehen sein, dass die Gestalt der Rollen zylindrisch, tonnen-, kegelförmig oder eine Kombination von zylindrisch und/oder tonnen- und/oder kegelförmig ist.

Bei dem Kettenfahrzeug oder Unterfahrzeug kann vorgesehen sein, dass die Fahrwerke parallel zueinander, nebeneinander oder hintereinander angeordnet sind. Vorzugsweise befinden sich die (vier) Fahrwerke auf beiden Längsseiten des Kettenfahrzeugs bzw. Unterfahrzeugs. Beispielsweise befinden sich auf jeder Längsseite zwei Fahrwerke, die in Längsrichtung hintereinander angebracht sind.

In einer besonderen Ausführungsform des Fahrzeugs weist es ein, vorzugsweise weitere Komponenten aufweisendes, Oberfahrzeug auf.

Schließlich ist/sind mindestens eines der Fahrwerke, vorzugsweise alle Fahrwerke, an dem Fahrzeugrahmen pendelfähig und/oder vorzugsweise aktiv, neigbar.

Der vorliegenden Erfindung liegt die überraschende Erkenntnis zugrunde, dass durch Gestaltung eines Fahrwerks für ein Kettenfahrzeug oder Unterfahrzeug mit Rollen auf einem Antriebselement und durch Anordnen eines Antriebs zum Antreiben des Antriebselements ein Fahrzeug, insbesondere ein Baufahrzeug, mit omnidirektionalen Fähigkeiten ausgerüstet bzw. nachgerüstet werden kann.

Das Fahrwerk, insbesondere Kettenfahrwerk, ist in der Lage, ein Objekt in eine beliebige Richtung (auch quer zur Laufrichtung der Ketten) oder auf einer beliebigen Bahn zu bewegen bzw. frei im Raum zu positionieren. Rotatorische und translatorische Bewegungen können hierbei gleichzeitig realisiert werden. Die Bewegungen können mit beliebiger Geschwindigkeit und Beschleunigung durchgeführt werden (dies hängt von den verwendeten Antrieben ab).

Das Fahrwerk kann als omnidirektionaler Fahrantrieb für mobile Plattformen eingesetzt werden, wenn eine freie und sichere Positionierung von schweren Objekten oder Maschinen notwendig ist. Es kann nicht nur auf glatten, sauberen Böden eingesetzt werden, wie es bei Mecanum-Räder der Fall ist, sondern auch bzw. insbesondere auf nicht präparierten, rauen, unebenen, nicht sauberen, steinigen oder beschädigten Böden. Dazu gehören:
- Beschädigte Böden aller Art (Löcher, Risse usw.)
- Nicht präparierte Betonböden
- Befestigte und unbefestigte Straßen
- Steinböden
- Gelände

Es eignet sich zum Bewegen, Rotieren und Positionieren von:
- Plattformen (insbesondere Plattformen für Lasttransporte)
- Ladeflächen
- Robotern
- Automaten
- Baumaschinen und Roboterbaumaschinen
- Arbeitsbühnen
- Montageplattformen
- Mobile Plattformen für Industrieroboter und sonstige Roboter
- Kleinroboter zu Forschungs- und Schulungszwecken
- Landmaschinen und Roboterlandmaschinen

Bei dem Fahrwerk wird das Antriebskonzept der Mecanum-Räder mit einem Ketten- bzw. Raupenfahrwerk kombiniert.

Das Kettenfahrzeug bzw. Unterfahrzeug ist zumindest in einer besonderen Ausführungsform besonders gut für Bewegungen auf unebenen Böden geeignet. Im Vergleich zu Fahrwerken mit Mecanum-Rädern weist es auch eine bessere Gewichtsverteilung auf. Durch die Erhöhung der Kontaktfläche können auch große Kräfte auf den Boden übertragen werden, ohne dass die Plattform dabei rutscht und ihre Position verliert. Dieses macht die Erfindung interessant für Anwendungen, in denen eine sichere Positionierung notwendig ist und große dynamische Kräfte generiert werden, wie etwa bei der Durchführung von Roboterbewegungen oder im Baumaschinenbereich.

Weitere Merkmale und Vorteile der Erfindung ergeben sich aus den beigefügten Ansprüchen und der nachfolgenden Beschreibung, in der mehrere Ausführungsbeispiele anhand der schematischen Zeichnungen im Einzelnen erläutert werden. Dabei zeigt:
- Figur 1: eine isometrische Ansicht sowie eine Draufsicht von einem Kettenfahrzeug gemäß einer besonderen Ausführungsform der vorliegenden Erfindung und eine isometrische Ansicht von dem Kettenfahrzeug als mobile Plattform für einen Industrieroboter (unten);
- Figur 2: Basisbewegungen des Kettenfahrzeugs von Figur 1;
- Figur 3: eine perspektivische Ansicht von einem Teil eines Fahrwerks mit einer Gummikette im Stand der Technik;
- Figur 4: eine perspektivische Ansicht (rechts) von einem Teil eines Fahrwerks mit einer Gummikette gemäß einer besonderen Ausführungsform der vorliegenden Erfindung und eine perspektivische Ansicht (links) einer Traverse der Gummikette;
- Figur 5: eine perspektivische Ansicht (rechts) von einem Teil eines Fahrwerks mit einer Gummikette gemäß einer besonderen Ausführungsform der vorliegenden Erfindung und eine perspektivische Ansicht (links) einer Traverse der Gummikette;
- Figur 6: eine perspektivische Ansicht von einem Fahrwerk mit einer Stahlkette im Stand der Technik und eine perspektivische Ansicht von Bodenplatten der Stahlkette;
- Figur 7: eine perspektivische Ansicht (rechts) von einem Teil eines Fahrwerks mit einer Stahlkette gemäß einer besonderen Ausführungsform der vorliegenden Erfindung und eine Explosionsansicht (links) eines Rollenhalters der Stahlkette;
- Figur 8: eine Explosionsansicht eines modifizierten Rollenhalters der Stahlkette;
- Figur 9: Draufsichten auf und Seitenansichten von Teilen von Fahrwerken gemäß besonderen Ausführungsformen der vorliegenden Erfindung mit unterschiedlichen Rollengestalten;
- Figur 10: Seitenansichten von Teilen von Fahrwerken gemäß besonderen Ausführungsformen der vorliegenden Erfindung mit unterschiedlichen Rollenlängen;
- Figur 11: eine Ansicht von hinten und eine Seitenansicht von einem Fahrwerk gemäß einer besonderen Ausführungsform der vorliegenden Erfindung vor dem Überfahren eines Hindernisses;
- Figur 12: eine isometrische und eine Vorderansicht von einem Teil eines Fahrwerks gemäß einer besonderen Ausführungsform der vorliegenden Erfindung mit seitlichen Rollen;
- Figur 13: Vorderansichten von einem Teil eines jeweiligen Fahrwerks mit (rechts) und ohne (links) seitliche Rollen im Vergleich beim Überwinden von Hindernissen;
- Figur 14: Seitenansichten von einem Unterfahrzeug als mobile Plattform gemäß einer besonderen Ausführungsform der vorliegenden Erfindung mit unterschiedlich geneigten Fahrwerken;
- Figur 15: Seitenansichten von einem Unterfahrzeug gemäß einer besonderen Ausführungsform der vorliegenden Erfindung mit unterschiedlich geeigneten Fahrwerken;
- Figur 16: eine Seitenansicht von einem Unterfahrzeug gemäß einer besonderen Ausführungsform der vorliegenden Erfindung beim Überbrücken von Höhenunterschieden;
- Figur 17: eine Seitenansicht von einem Teil eines Fahrwerks gemäß einer besonderen Ausführungsform der vorliegenden Erfindung im Ketten- und im Rad-Modus (rechts)
- Figur 18: Seitenansichten von einem Fahrwerk gemäß einer besonderen Ausführungsform der vorliegenden Erfindung im Rad-Modus und einem bekannten Mecanus-Rad (rechts) zum Vergleich; und
- Figur 19: eine isometrische (links) und eine Seitenansicht (rechts) von einem Fahrwerk gemäß einer besonderen Ausführungsform der vorliegenden Erfindung mit einem Rollenschutz.

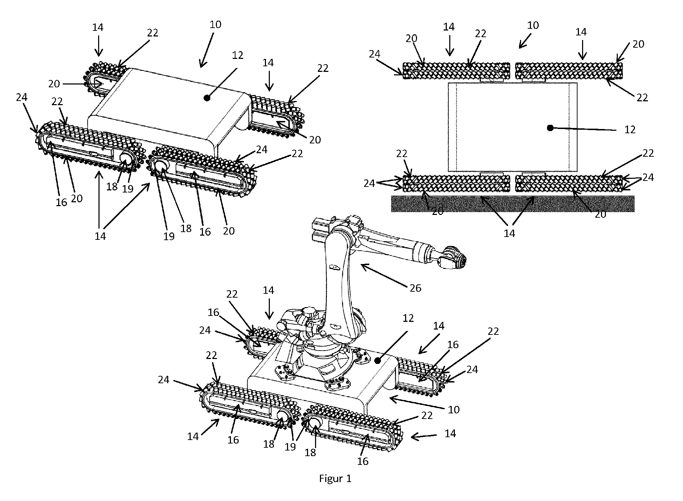

Das in der Figur 1 gezeigte Kettenfahrzeug 10 umfasst einen Fahrzeugrahmen 12 und vier daran montierte Fahrwerke 14, wobei davon auf jeder Längsseite zwei Fahrwerke in Längsrichtung hintereinander und mit derselben Laufrichtung angeordnet sind. Jedes der Fahrwerke 14 umfasst einen Fahrwerkträger 16 mit einem an einem Ende daran gelagerten Antriebsrad 18, einem an dem gegenüberliegenden Ende daran gelagerten Umlenkrad (nicht gezeigt) und mehreren daran unterseitig gelagerten Stützrädern (nicht gezeigt) für eine jeweilige umlaufende endlose Kette 20, und einen integrierten Antrieb 19 zum Antreiben des jeweiligen Antriebsrads 18. Genauer gesagt liegen sich die Antriebsräder 18 von den hintereinander angeordneten Fahrwerken 14 einander gegenüber.

Auf den Außenflächen 22 der Ketten 20 sind jeweils mehrere Rollen 24 (von denen nur einige gekennzeichnet sind) in beispielsweise zwei Reihen nebeneinander mit derselben Orientierung schräg zur Laufrichtung der jeweiligen Kette 20 passiv gelagert montiert und damit frei drehbar. Die Rollen könnten aber z. B. auch nur einreihig angeordnet sein.

Die Rollen der beiden Fahrwerke auf jeder Längsseite weisen eine zur Orientierung der Rollen der beiden Fahrwerke auf der gegenüberliegenden Längsseite entgegengesetzte oder spiegelbildliche Orientierung auf. Im vorliegenden Beispiel sind sie schräg nach außen angeordnet und entsprechendes gilt für die Rollen der beiden auf der gegenüberliegenden Längsseite angeordneten Fahrwerke.

Auf dem Kettenfahrzeug 10 kann ein Industrieroboter 26 angeordnet sein, sodass in einem solchen Fall das Kettenfahrfahrzeug 10 als eine mobile Plattform für den Industrieroboter 26 dient.

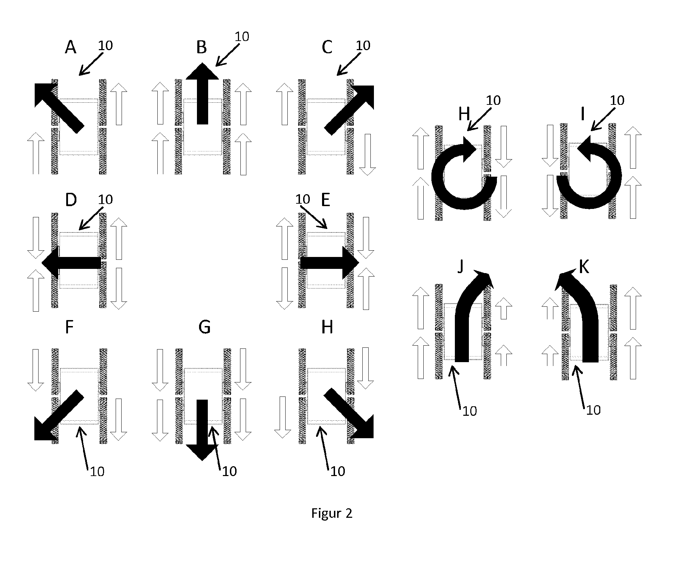

Für die Realisierung der omnidirektionalen Bewegungen des Kettenfahrzeugs 10 werden die Antriebe der jeweiligen Kettenfahrwerke einzeln angesteuert. Durch die Drehrichtung sowie die Drehzahl der jeweiligen Antrieben (und somit der Bewegungsgeschwindigkeit und Bewegungsrichtung der omnidirektionalen Ketten 20) entstehen Kraftvektoren zwischen Fahrzeug und Boden. Durch die Addition der Kräfte entsteht eine resultierende Kraft (oder ein Drehmoment), die die Bewegungsrichtung bzw. die Rotationsrichtung des Fahrzeuges definiert (siehe Pfeile in der Figur 2). Wenn die Zeitkomponente mitberücksichtigt wird, die Kraftvektoren sich also in der Zeit ändern, können Translationen und Rotationen kombiniert werden und somit komplexe Bahnen bzw. Trajektorien gefahren werden. Bei Fahrzeugen mit Mecanum-Rädern werden die Positionen der Kontaktpunkte zwischen Rad und Boden für die Berechnung der Drehzahlen und Richtungen verwendet. Da diese Punkte aufgrund der Rollengeometrie in der Zeit variieren können, wird zweckmäßig der Mittelpunkt (Rotationachse) des Rades als Bezugspunkt für die Berechnungen verwendet. Bei den omnidirektionalen Ketten wird ähnlich vorgegangen. Da aber mehrere Rollen stets in Kontakt mit dem Boden sind und ein Kettenfahrwerk mindestens zwei Umlenkachsen hat, können diese nicht für die Berechnungen verwendet werden. Zweckmäßig wird der Mittelpunkt der Fahrwerke bzw. Fahrschiffe verwendet.

Beispielhafte Grundbewegungen des Kettenfahrzeugs bzw. allgemein eines Fahrzeuges mit omnidirektionalen Kettenantrieben werden in Figur 2 gezeigt. Die Pfeile zeigen die Bewegungsrichtung der Kette (bezogen auf die oberen Rollen) und die Bewegungsrichtung bzw. Rotationsrichtung des Fahrzeuges. Die Grundbewegungen werden folgendermaßen aufgelistet realisiert:
Vor- und rückwärts: Alle Ketten werden mit gleicher Geschwindigkeit und in die gleiche Richtung bewegt. Je nach Richtung erfolgt eine Vor- oder Rückwärtsbewegung des Fahrzeuges.
Diagonal: Für eine 45° Bewegung werden die zwei Ketten in gegenüberliegenden Ecken in entgegengesetzten Richtungen angetrieben. Die anderen zwei Ketten werden nicht angetrieben. Um beispielsweise eine links diagonale Vorwärtsbewegung (Figur 2A) zu realisieren, werden die Ketten rechts oben in Vorwärtsrichtung und links unten in Rückwärtsrichtung mit gleicher Drehzahl angetrieben. Andere Winkel sind durch den Betrieb aller Antriebe ebenfalls möglich.
Seitwärts: Für eine reine Seitwärtsbewegung werden die Ketten an den jeweiligen Seiten des Fahrzeugs in entgegengesetzten Richtungen mit gleicher Drehzahl angetrieben, wobei die vorderen Ketten ebenfalls unterschiedliche Richtungen haben. Um zum Beispiel eine seitliche Bewegung nach links (Figur 2D) zu realisieren, werden die Ketten rechts oben und links unten in Vorwärtsrichtung bewegt und die Ketten links oben und rechts unten in Rückwärtsrichtung bewegt.
Rotation um die eigene Achse: Um eine solche Rotation zu realisieren, werden beide Ketten der jeweiligen Seiten zusammen vor- oder rückwärts mit gleicher Drehzahl bewegt. Um beispielsweise eine Rotation gegen den Uhrzeigersinn zu realisieren, werden die linken Ketten rückwärts und die rechten Ketten vorwärts mit gleicher Geschwindigkeit bewegt.
Kurven: Um Kurven zu fahren, werden die Drehzahlen und Richtungen der jeweiligen Ketten unabhängig voneinander gewählt. So kann es sein, dass für das Fahren einer bestimmten Kurve alle Ketten unterschiedliche Drehzahlen und Richtungen haben. Unterschiedliche Drehzahlen und Richtungen sind aber nicht zwingend erforderlich. So kann es, um eine Rechtskurve bei einer Vorwärtsbewegung zu fahren, sinnvoll sein, dass beide linken Ketten mit gleicher Geschwindigkeit und Richtung angetrieben werden (Figur 2J). Die rechten Ketten werden ebenfalls mit gleicher Geschwindigkeit (zueinander) und Richtung angetrieben, allerdings mit einer niedrigeren Geschwindigkeit als die linken Ketten.

Bei einer Ausführung für mittlere Traglast werden zum Beispiel Kettenfahrwerke aus dem Baumaschinenbereich eingesetzt. Diese haben viele Vorteile gegenüber Kettenfahrantrieben aus dem Robotikbereich. Zum einen sind Baumaschinenketten besonders robust konstruiert und gebaut und sind somit weniger empfindlich gegenüber Schmutz, Steinen usw. Zum anderen werden sie als Massenware produziert und sind somit im Vergleich zu Sonderlösungen aus der Robotik sehr günstig. Ersatzteile und andere Komponenten sind einfach und günstig zu erwerben (z.B. Gummiketten oder Antriebe).

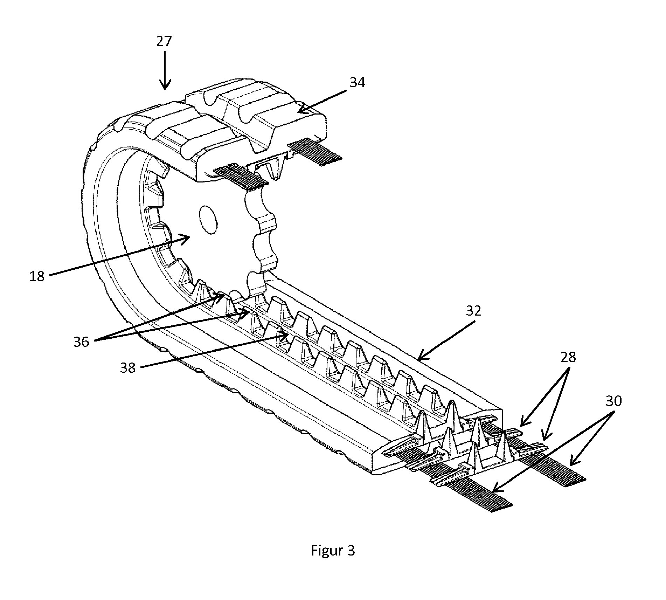

Bei dieser Ausführung für mittlere Traglast wird ein Kettenfahrantrieb aus dem Baumaschinenbereich eingesetzt, wobei eine neuartige Gummikette verwendet wird. In der Regel besteht eine Gummikette 27 im Stand der Technik aus mehreren Traversen 28 (Stahlelementen) (siehe Figur 3), welche zusammen mit Stahlcorden 30 (für zusätzliche Festigkeit) in einem Gummiring 32 vulkanisiert sind. Auf der Oberfläche des Gummiringes befinden sich Gummistollen (Profil) 34. Figur 3 zeigt diesbezüglich auch noch ein Antriebsrad 18 und eine Kettenführung 36 sowie einen Kettenradeingriff 38.

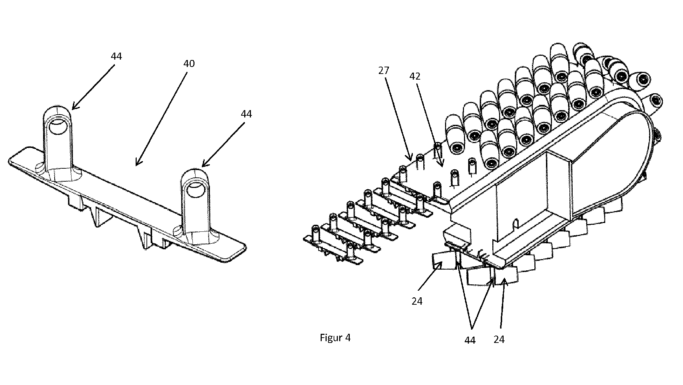

Bei der Ausführung gemäß einer besonderen Ausführungsform der vorliegenden Erfindung wird eine neuartige Gummikette 27 mit neuer Traverse 40 und glatter Oberfläche 42 (ohne Profil) verwendet (siehe Figur 4). Die Halter 44 für die Rollen werden in die Traversen 40 integriert (Figur 4, links). Bei der Vulkanisierung ragen diese aus der Oberfläche heraus, sodass die Rollen 24 direkt auf die Traversen montiert werden können. Eine solche Ausführung wird in Figur 4 (rechts) dargestellt.

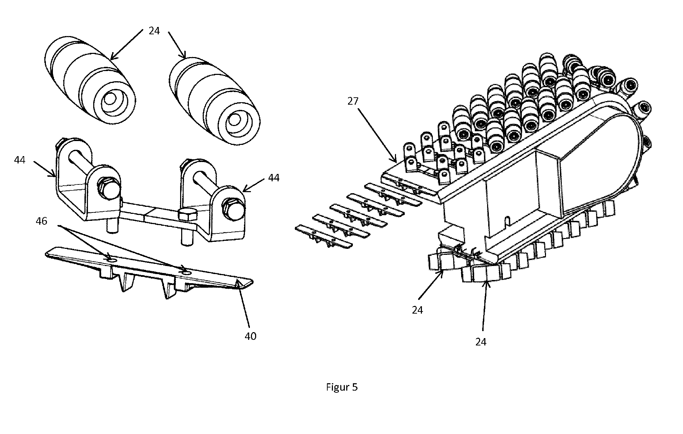

Bei einer weiteren besonderen Ausführung der Erfindung werden ebenfalls Kettenfahrwerke aus dem Baumaschinenbereich eingesetzt, wobei in diesem Fall eine auf dem Markt erhältliche Gummikette verwendet wird. Einige besondere Ausführungen von Gummiketten (z.B. die Gummikette KS der Fa. Gumatech) haben die Besonderheit, dass sie anstatt herausragender Gummistollen eine glatte Oberfläche haben. In den Traversen 40 (Figur 5) befinden sich Gewindebohrungen 46, in die Stollen, Spitzen oder im vorliegenden Fall Halter 44 für Rollen 24 eingeschraubt werden können.

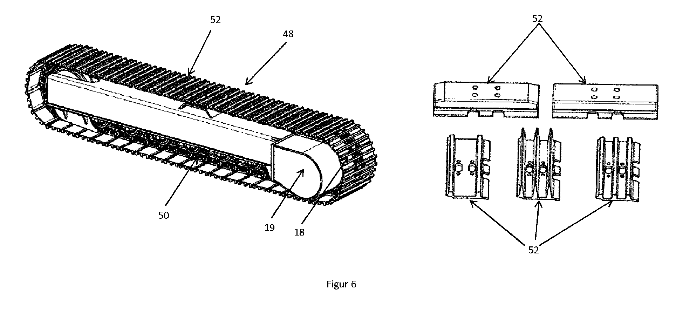

Für Unterfahrzeuge von Baumaschinen und mobilen Geräten der schweren Klasse können aufgrund der mechanischen Beanspruchungen keine Gummiketten eingesetzt werden. Bei dieser Klasse werden Stahlketten 48 favorisiert. In der Regel besteht eine solche Stahlkette 48 im Stand der Technik aus Kettengliedern (Kettenband) 50 und den darauf montierten Bodenplatten 52, welche aus Gummi- oder aus Stahl sein können (Figur 6).

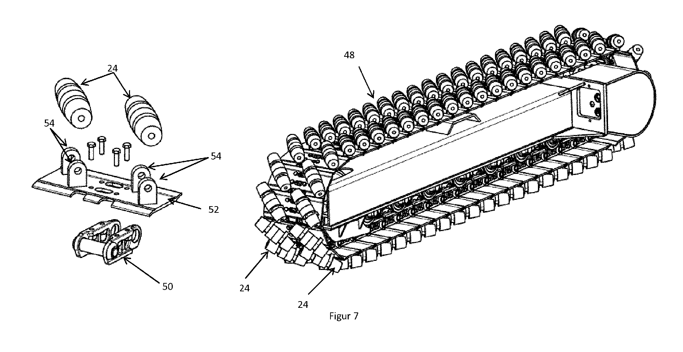

Bei einer besonderen Ausführungsform gemäß der vorliegenden Erfindung werden die Halter 54 für die Rollen 24 in die Bodenplatten 52 integriert (durch Schweißen, Gießen o.ä.) und die Rollen 24 darauf montiert. Die Lagerung der Rollen 24 kann so gestaltet werden, dass sich die Rotationsachse der Rolle oberhalb (Figur 7), unterhalb oder eben auf der Oberfläche der Bodenplatte befindet. Die Anzahl an Rollen pro Bodenplatte ist für die Funktionalität der omnidirektionalen Kette nicht relevant.

Eine beispielhafte Ausführung Alternative dazu sieht so aus, dass die Halter direkt in den Gliedern der Gleiskette ohne eine Bodenplatte integriert werden (nicht dargestellt).

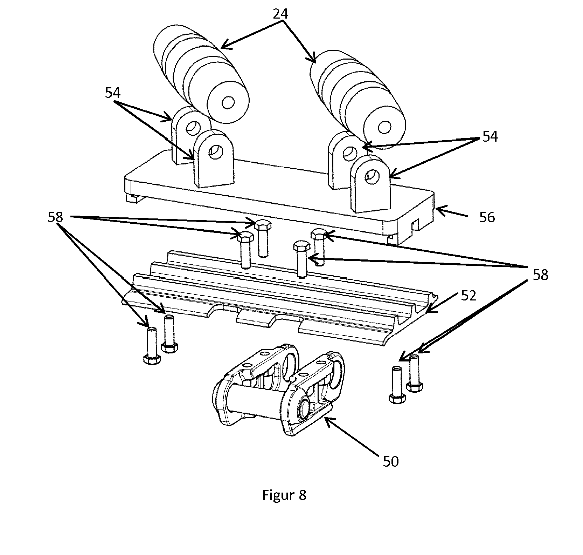

Eine weitere beispielhafte Alternative dazu sieht so aus, dass die Halter in sog "Schuhe" 56 integriert sind (Figur 8). Solche Schuhe sind Platten, welche mittels seitlichen oder senkrechten Schrauben 58 auf die Bodenplatten 60 befestigt werden. Die Schuhe mit Rollen können schnell auf- und abgebaut werden, sodass das Fahrzeug von einem omnidirektionalen Fahrzeug, mit sehr geringem Aufwand, zu einem herkömmlichen Kettenfahrzeug umfunktioniert werden kann. Gebrochene Halter/Schuhe sind einfach zu ersetzen.

Die Basisfunktionalität der omnidirektionalen Ketten wird definiert als die Fähigkeit der Ketten, ein Objekt oder Fahrzeug auf einer Ebene omnidirektional, also in eine beliebige Richtung, mit beliebiger Orientierung, bei beliebiger Geschwindigkeit zu bewegen, in ähnlicher Form wie ein Fahrzeug mit Mecanum-Räder omnidirektional bewegt wird. Diese Basisfunktionalität kann durch Erweiterungen beeinflusst oder verbessert werden. Dazu gehören beispielsweise:

### Länge der Fahrwerke

Die omnidirektionalen Fähigkeiten der Erfindung sind durch die Länge der Fahrwerke nicht bzw. marginal beeinflusst. Bei Bewegungen in einer Geraden (unabhängig der Richtung) spielt die Länge der Fahrwerke bzw. Fahrschiffe keine Rolle. Beim Fahren von Kurven ist bei längeren Fahrwerke bzw. Fahrschiffen ein erhöhter Schlupf der Rollen zu erwarten. Bei Rotationen um die eigene Achse kann der Schlupf der Rollen sogar positiv auf den Verschleiß der Ketten wirken. Außerdem wirkt sich bei herkömmlichen Kettenfahrantrieben eine größere Länge positiv auf die Gewichtsverteilung und auf die Standsicherheit des Fahrzeugs aus.

### Breite der Fahrwerke

Die Breite der Fahrwerke hat keinen Einfluss auf die omnidirektionalen Fähigkeiten des Systems. Je breiter die Fahrwerke jedoch sind, desto mehr Platz steht für den Einbau der Rollen zur Verfügung.

### Rollengeometrie

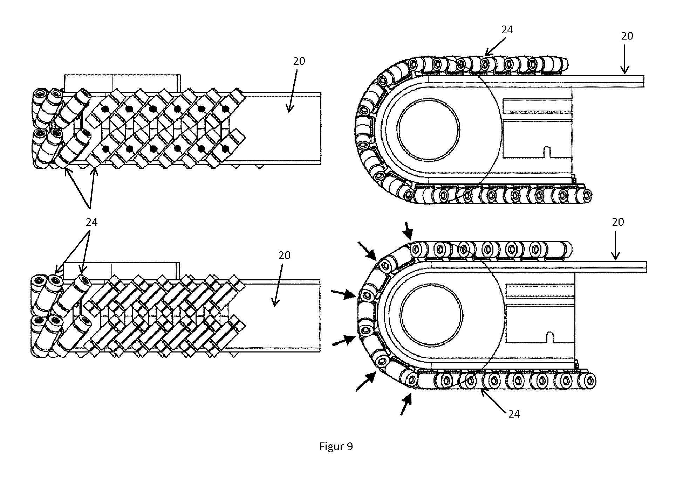

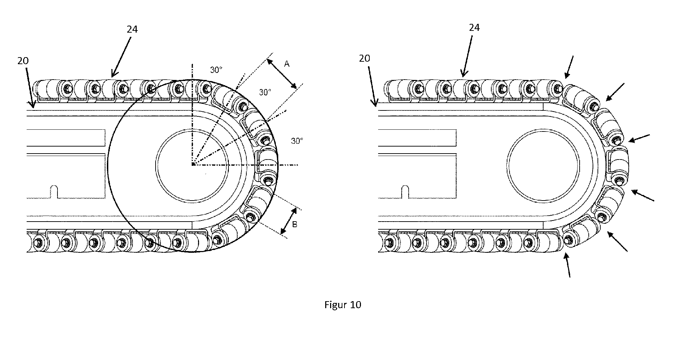

Durch die Änderung der Rollengeometrie können die Eigenschaften der Kette 20 beeinflusst werden. Diese kann man nach folgenden Kriterien unterscheiden: Form, Länge und Art der Stützung.
- Form: Die Mantelfläche der Rollen ist beispielsweise entweder zylindrisch, tonnen-, kegelförmig oder eine Kombination der genannten Geometrien. Zylindrische Rollen haben den Vorteil, dass sie eine größere Kontaktfläche mit dem Boden bieten (linienförmig) jedoch eine schlechtere Laufruhe haben, da die Enden der Rollen 24 über den projizierten "Laufkreis" herausragen (Figur 9, unten). Somit eignen sich diese Rollen für Anwendungen, in denen große Gewichte oder dynamische Kräfte bei geringeren Fahrzeugbewegungen erwartet werden. Tonnenförmige Rollen 24 dagegen bieten eine bessere Laufruhe, dafür aber nur punktförmige Kontaktflächen (Figur 9, oben), somit eignen sich diese Rollen für Anwendungen mit geringeren statischen und dynamischen Belastungen bei größeren Fahrzeugbewegungen, bzw. für Anwendungen, bei denen ein Arbeitsgerät während der Fahrt präzise positioniert werden muss. Eine Kombination von tonnen-, kegelförmigen oder zylindrischen Oberflächen kann die Vorteile der einzelnen Geometrien vereinen.
- Länge: Die Rollen 24 werden auf dem Umfang der Kette in einer definierten Teilung montiert. Wenn die Länge der projizierten Fläche der Rolle 24 (Figur 10, Abstand B) kleiner als die Länge des Kettenumfangs ist (an der Höhe der Rollenachse gemessen, Figur 10, Abstand A), wird die Rolle als "kurz" bezeichnet. Ansonsten wird die Rolle als "passend" oder "lang" bezeichnet. Bei kürzeren Rollen 24 entstehen Lücken (Figur 10, rechts) und bei längeren Rollen entstehen Überlappungen der Rollfläche. Die Verwendung von kurzen Rollen oder zylindrischen Rollen kann negative Effekte auf die Laufruhe haben, da die Rollen bei erstmaligem Kontakt auf den Boden schlagen und Vibrationen erzeugen. Dieser Effekt wird als Polygonaleffekt bezeichnet. Je nach Anwendung kann dies unerwünscht, gewollt oder vernachlässigbar sein.

### Geometrie der Rollenhalter für die Rollen

Die Befestigung der Rolle 24 auf der Kette 20 kann je nach Kettenart in unterschiedlichen Ausführungen realisiert werden.

**Anzahl der Lagerungspunkte:** Die Befestigung der Rolle auf der Kette wird mit einem Halter 44 realisiert. Je nach Ausführung kann die Rolle 24 einfach oder mehrfach gelagert werden. (Figur 4 und Figur 5). Dies hat Vor- und Nachteile bezüglich der zulässigen Lasten bzw. der Drehmomente, die die Rollen aufnehmen können.
- **Integrierter Halter:** Der Halter ist in die Kette selbst integriert. Bei Gummiketten ist der Halter in die Traverse miteingegossen. Bei Gleisketten ist der Halter ebenfalls in das Kettenglied miteingegossen.
- **Angeschraubter Halter:** Die Halter werden auf die Lauffläche der Kette bzw. der Gleise mittels Schrauben o.ä. Verbinder befestigt.

### Seitliche Rollen

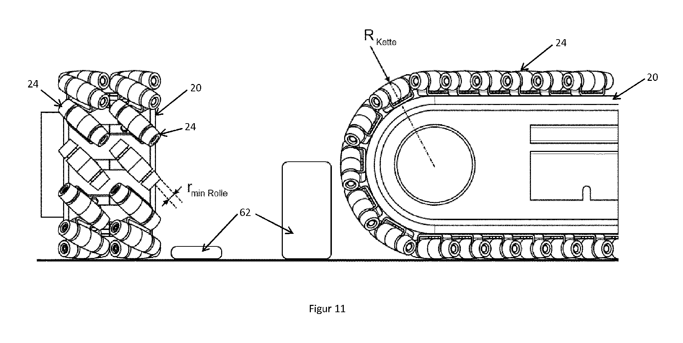

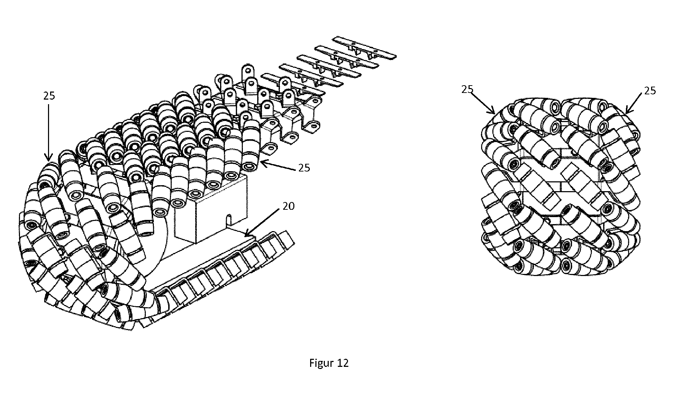

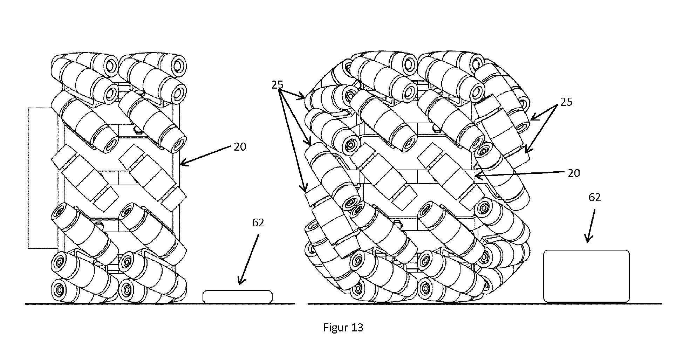

Omnidirektionale Ketten 20 können in der Basiskonfiguration (mit Rollen 24 mit Drehachse parallel zur Lauffläche) bei einer Vorwärtsbewegung Hindernisse 62 überwinden, die eine Höhe gleich oder kleiner als der Radius des Rades 24 oder der Kette 20 haben (siehe Figur 11, rechts). Bei seitlichen Bewegungen hängt die maximale Höhe der zu überwindenden Hindernisse vom kleinsten Radius der passiven Rolle ab (Ramirez-Serrano, A. und Kuzyk, R.: "Modified Mecanum Wheels for Traversing Rough Terrains" in Sixth International Conference on Autonomie and Autonomous Systems, 2010, Mexico). Somit können nur sehr kleine Hindernisse bei seitlichen Bewegungen überwunden werden (siehe Figur 11, links). Durch die zusätzliche Anbringung von Rollen 25 an den Seiten der Kette 20 (siehe Figur 12) können größere Hindernisse 62 überfahren werden (sieh Figur 13). Die Rotationsachsen der seitlichen Rollen 25 können parallel oder schräg zu den Traversen sein. Die Länge der seitlichen Rollen 25 ist unabhängig von der Länge der Rollen 24 auf der Lauffläche der Kette 20. Die Geometrie der seitlichen Rollen 25 ist ebenfalls unabhängig von der Geometrie der mittleren Rollen.

### Neigungseinstellung der Fahrwerke

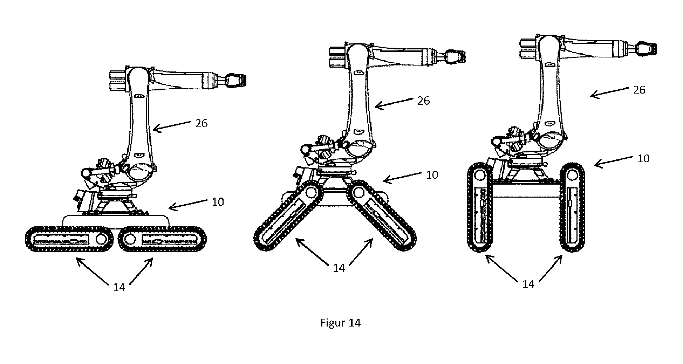

Eine Erweiterung des Konzeptes stellt die aktive Verstellung der Neigung der Fahrwerke 14 dar. Diese kann anwendungsabhängig z. B. mit einer Motor-Zahnrad-Kombination oder mit einem pneumatischen/hydraulischen Zylinder oder sonstiger Antriebsart realisiert werden. Durch die Verstellung der Neigungswinkel der Fahrwerke kann die Länge und Höhe des Kettenfahrzeugs 10 verändert werden. Durch die Höhenanpassung des Kettenfahrzeugs 10 kann z.B. die Bodenfreiheit beim Fahren von unwegsamem Gelände erhöht werden oder die Reichweite eines, z.B. auf dem Kettenfahrzeug montierten Werkzeugs oder Roboter(z.B. Industrieroboter 26) erweitert werden. Zum anderen ist es möglich die Gesamtlänge der Maschine zu verändern. So können die Fahrwerke "zugeklappt werden" um die Gesamtlänge des Kettenfahrzeugs 10 für den Transport zu reduzieren (Figur 14).

Eine Reduktion der Gesamtlänge der Maschine hat auch den Vorteil, dass die Manövrierfähigkeit erhöht wird. Dadurch kann die Maschine zum Beispiel sicher durch enge Gänge oder zwischen Hindernisse bewegt werden.

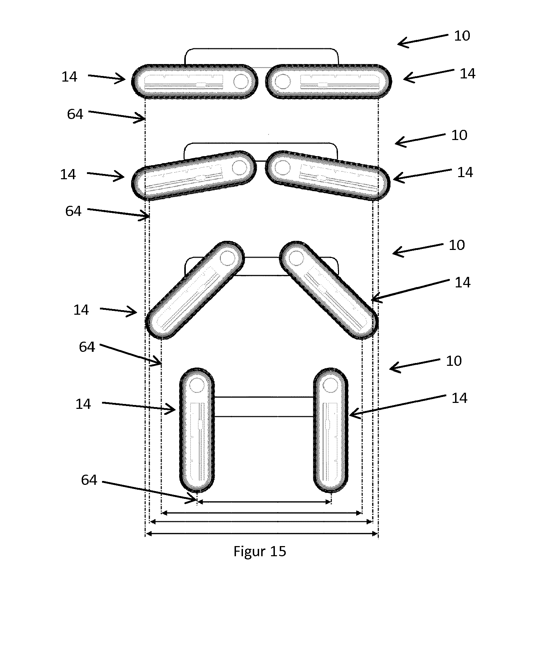

Ein weiterer Vorteil liegt darin, dass die Kippkante 64 verschoben werden kann (Figur 15). So kann ein Kettenfahrzeug 10 mit aufgeklappten Fahrwerken 14 eine Last (z.B. Arbeitsgeräte oder Greifer) weiter entfernt halten ohne zu kippen oder schwerere Lasten heben, als ein Kettenfahrzeug mit zusammen- oder zugeklappten Fahrwerken 14 (Vergleich mit einem Bagger mit Pratzen und ohne).

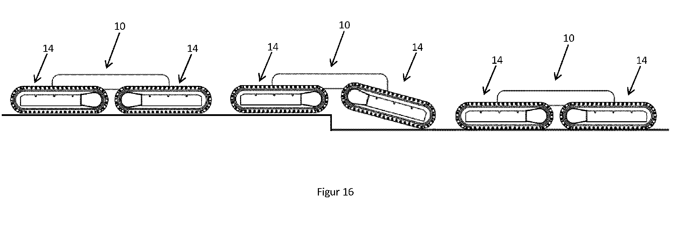

Das aktive Neigen der Fahrwerke 14 kann auch benutzt werden, um große Höhenunterschiede auf dem Boden zu überwinden, ohne dass die Plattform eine spezifische Neigung verliert (z.B. die Waagerechte) oder unkontrolliert abfällt (Figur 16).

Mecanum-Räder in einfacher Ausführung haben den Nachteil, dass zu jedem Zeitpunkt nur ein punktförmiger Kontaktpunkt zwischen Rad und Boden besteht (beim Übergang von einer Rolle zur anderen bestehen für kurze Zeit zwei Kontaktpunkte). Bei Mecanum-Rädern in mehrfacher Ausführung können mehrere Kontaktpunkte gleichzeitig bestehen.

Die omnidirektionalen Ketten haben unabhängig von der Ausführung (mit einer oder mit mehrere Rollenreihen) stets mehrere gleichzeitige Kontaktpunkte mit dem Boden, was viele Vorteile bringt. Ein Nachteil ist jedoch, dass das Kettenfahrzeug durch die Kettenfahrwerke unter Umständen länger wird als das gleiche Kettenfahrzeug in Radausführung. Somit kann die Wendigkeit des Fahrzeuges mit omnidirektionalen Ketten in engen Räumen schlechter sein als bei einem Fahrzeug mit Mecanum-Rädern. Um diesem Nachteil entgegenzuwirken, wird gemäß einer besonderen Ausführungsform ein Umschalten zwischen Ketten- und Rad-Modus vorgesehen.

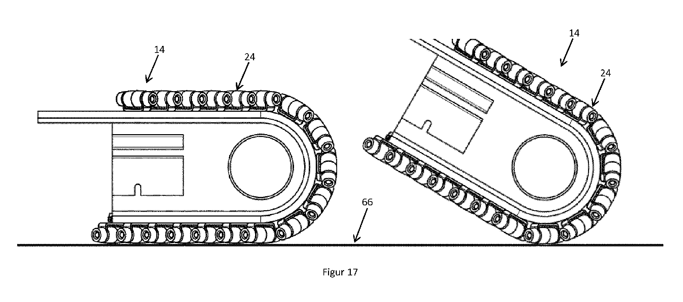

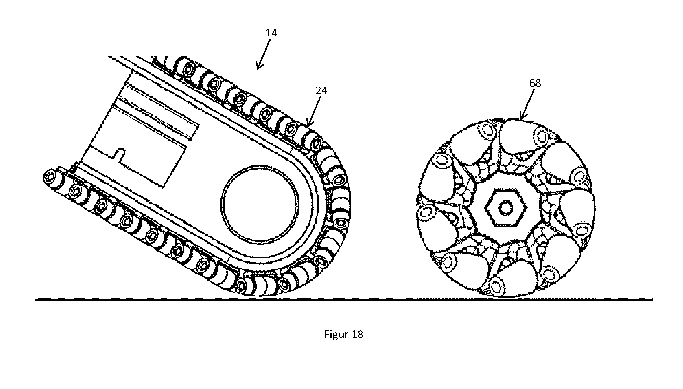

Als Kettenfahrwerk wurde ein Standardfahrwerk (herkömmliche oder Delta-Fahrschiffe) mit runden Enden gewählt. Durch das Kippen der Fahrwerke können die omnidirektionalen Fähigkeiten geändert werden. In waagerechter Konfiguration liegt das Fahrwerk 14 bzw. Fahrschiff parallel zum Boden, sodass mehrere Rollen 24 in Kontakt mit dem Boden 66 sind und das Gewicht auf die gesamte Kette verteilt ist (Figur 17, links). Die Aufhängung der Fahrwerke 14 bzw. Fahrschiffe ist so gewählt, dass das Kippen der Fahrwerke möglich wird. In gekippter Konfiguration wird das Gesamtgewicht nicht mehr auf mehrere Rollen verteilt, sondern wird nur auf eine der Rolle geleitet, die sich auf dem runden Ende befindet (Figur 17, rechts). Im Kettenmodus wird der Mittelpunkt der Fahrwerke 14 für die Berechnungen der Drehzahlen und Richtungen benutzt. Beim Umschalten auf Rad-Modus kann der Mittelpunkt der Fahrwerke 14 nicht mehr benutzt werden, da sonst falsche Werte berechnet würden. Deswegen wird nun, angelehnt an den Algorithmen für Mecanum-Räder, der Mittelpunkt des runden Endes der Fahrwerke gewählt (Mittelpunkt des Kreises in Figur 18). Das Fahrzeug verhält sich nun, als ob es auf Mecanum-Räder 68 fahren würde (Figur 18, rechts). Dieser Effekt tritt bereits bei einer sehr geringen Änderung der Neigung ein. Somit ist es möglich, die Standsicherheit und Lenkfähigkeit des Fahrzeugs zu beeinflussen. Je steiler die Neigung der Fahrwerke, desto kompakter und somit wendiger in engen Räumen ist das Fahrzeug.

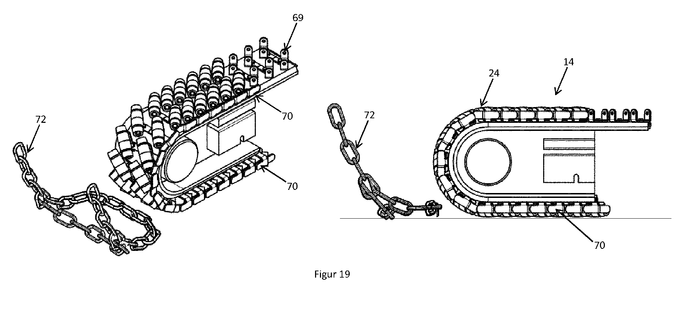

Beim Fahren auf steinigen oder unsauberen Boden können Hindernisse, wie z.B. Steine, Stöcke usw. zwischen die Rollen gelangen und die Kette hemmen. Dies kann durch mehrere Methoden verhindert werden. Beispielsweise:
**Füllen des Spalts zwischen den Rollen:** Der Spalt, der sich zwischen zwei hintereinander angeordneten Rollen 24 befindet, kann mechanisch gefüllt werden. Dies kann z.B. durch in den Halter 69 für die Rollen integrierte Zähne realisiert werden. Diese sind in den zwei Haltern abwechselnd angeordnet, sodass die Zähne der vorderen Rolle in die Vertiefungen des hinteren Halters eindringen und somit den Spalt schließen. An die Seiten der Halter können "vertikale Wände 70" eingesetzt werden, die die seitlichen Öffnungen nach dem o.g. Prinzip abschließen (Figur 19, Pfeil). Somit können auch bei seitlichen Bewegungen keine Objekte zwischen die Rollen eindrängen.
**Abstreifer:** Hindernisse können mittels Abstreifer geräumt werden, die vor und/oder an den Seiten der Fahrschiffe angeordnet sind. Die vorderen Abstreifer können in Schildform (ähnlich wie Schneepflüge), als hängende Kette 72 (siehe Figur 19) oder als Bürste/Besen (ähnlich wie Reifenschutz gegen Krähenfüßen) angebracht werden. Der Seitenschutz kann ebenfalls in Form eines Schildes bzw. einer Bürste realisiert werden, wobei diese nicht nur fest an den Seiten der Fahrwerke montiert werden können, sondern auch direkt auf dem Halter für die Rollen (ähnlich wie die seitlichen Rollen aus Kapitel). Somit können die Hindernisse durch die Kettenbewegung "weggefegt" werden. **Integration der Rollen in die Kette bzw. Kettenglieder:** Die Rollen werden in die Ketten eingesenkt, sodass nur ein Teil der Rolle über die Oberfläche der Kette herausragt. Somit entsteht kein Spalt zwischen den Rollen.

Die Erfindung bietet zumindest in besonderen Ausführungsformen folgende Vorteile:
- Durch die gezielte Steuerung der Fahrantriebe können Bewegungen sowohl in Längsals auch in Querrichtung generiert werden.
- Sehr geringer Bodendruck ggü. Mecanum-Räder. Fahren auf weichem Boden möglich.
- Fahren über unebenes Gelände ohne aufwendige Federung möglich.
- Überbrückung von Lücken im Boden, sodass fahren über Fugen, Löcher o.ä. möglich ist, ohne eine unkontrollierte Bewegung zu verursachen (z.B. zwischen LKW und Laderampe)
- Durch den runden Verlauf der Kette auf das Ende des Fahrwerkes und die Verwendung von gekrümmten passiven Rollen ergibt sich an den Enden der Fahrwerke die gleiche Geometrie wie bei einem Mecanum-Rad. In gekipptem Zustand der Fahrwerke kann das Fahrzeug genau wie ein Fahrzeug mit Mecanum-Rädern angesteuert werden.
- Durch das Kippen der Fahrwerke kann die Länge des Fahrzeugs verlängert/verkürzt oder die Gesamthöhe erhöht/reduziert werden. Die Kippkannten können verlagert werden und somit die Standsicherheit beeinflusst werden.
- Durch den großen Radius der Kette können größere Hindernisse beim Vorwärtsfahren überfahren werden. Durch Verwendung von schrägen, seitlichen Rollen können größere Hindernisse auch beim seitlichen Fahren überfahren werden.
- Durch die Verwendung von "Abstreifern" werden Hindernisse automatisch von der Fahrspur der Kette geräumt. Die Verwendung von Seitenwänden verhindert, dass Hindernisse zwischen den Rollen gelangen können.
- Durch die Anwendung herkömmlicher Kettenfahrwerke von Baumaschinen ist die Konstruktion kostengünstig und sehr robust zu realisieren.
- Die Erfindung ist leicht skalierbar und kann sowohl für sehr leichte Roboterplattformen, als für schwere Baumaschinen verwendet werden.

Die in der vorstehenden Beschreibung, in den Zeichnungen sowie in den Ansprüchen offenbarten Merkmale der Erfindung können sowohl einzeln als auch in den beliebigen Kombinationen für die Verwirklichung der Erfindung in ihren verschiedenen Ausführungsformen wesentlich sein.

### Bezugszeichenliste

- 10: Kettenfahrzeug
- 12: Fahrzeugrahmen
- 14: Fahrwerke
- 16: Fahrwerkträger
- 18: Antriebsrad
- 19: Antriebe
- 20: Kette
- 22: Außenflächen
- 24: Rollen
- 25: Rollen
- 26: Industrieroboter
- 27: Gummikette
- 28: Traverse
- 30: Stahlcorde
- 32: Gummiring
- 34: Gummistollen
- 36: Kettenführung
- 38: Kettenradeingriff
- 40: Traverse
- 42: Oberfläche
- 44: Halter
- 46: Gewindebohrung
- 48: Stahlkette
- 50: Kettenband
- 52: Bodenplatte
- 54: Halter
- 56: Schuhe
- 58: Schrauben
- 60: Bodenplatten
- 62: Hindernisse
- 64: Kippkante
- 66: Boden
- 68: Mecanum-Rad
- 69: Halter
- 70: Wände
- 72: Kette

## Patentansprüche

1. Vorzugsweise nachrüstbares Fahrwerk (14) für ein Kettenfahrzeug (10) oder ein Unterfahrzeug, umfassend
einen Fahrwerkträger (16) mit mindestens einem daran gelagerten Antriebsrad (18) und mindestens einem daran gelagerten Umlenkrad,
ein endloses Antriebselement, das um das mindestens eine Antriebsrad und das mindestens eine Umlenkrad läuft und auf dessen Außenfläche (22) Rollen (24) schräg zur Laufrichtung des Antriebselements passiv gelagert montiert sind, und
einen Antrieb (19) zum Antreiben des mindestens einen Antriebsrads.

2. Fahrwerk (14) nach Anspruch 1, **dadurch gekennzeichnet, dass** das Antriebselement eine Kette (20), insbesondere aus Gummi oder Stahl, eine Raupe oder ein Gurt ist.

3. Fahrwerk (14) nach Anspruch 1 oder 2, **dadurch gekennzeichnet, dass** der Antrieb (19) ein hydraulischer oder elektrischer Antrieb ist.

4. Fahrwerk (14) nach einem der Ansprüche 1 bis 3, **dadurch gekennzeichnet, dass** die Gestalt der Rollen (24) zylindrisch, tonnen-, kegelförmig oder eine Kombination von zylindrisch und/oder tonnen- und/oder kegelförmig ist.

5. Kettenfahrzeug (10) oder Unterfahrzeug, umfassend einen Fahrzeugrahmen (12) und mindestens zwei daran montierte Fahrwerke (14) nach einem der vorangehenden Ansprüche, wobei die Laufrichtungen der Antriebselemente der Fahrwerke (14) parallel sind und zumindest ein Teil der Rollen (24) eines Fahrwerkes (14) entgegengesetzt oder spiegelbildlich zu zumindest einem Teil der Rollen (24) eines benachbarten Fahrwerks (14) orientiert ist.

6. Kettenfahrzeug (10) oder Unterfahrzeug nach Anspruch 5, **dadurch gekennzeichnet**, das die Fahrwerke (14) parallel zueinander, nebeneinander oder hintereinander angeordnet sind.

7. Fahrzeug, insbesondere Baufahrzeug mit mindestens einem Werkzeug, Fahrzeug für landwirtschaftliche Zwecke und Roboterplattform, umfassend ein Kettenfahrzeug (10) oder ein Unterfahrzeug nach Anspruch 5 oder 6 mit mindestens vier, vorzugsweise genau vier, Fahrwerken (14) nach einem der Ansprüche 1 bis 4.

8. Fahrzeug nach Anspruch 7, **dadurch gekennzeichnet**, das es ein, vorzugsweise weitere Komponenten aufweisendes, Oberfahrzeug aufweist.

9. Fahrzeug nach Anspruch 7 oder 8, **dadurch gekennzeichnet**, das mindestens eines der Fahrwerke (14), vorzugsweise alle Fahrwerke (14), an dem Fahrzeugrahmen (12) pendelfähig und/oder vorzugweise aktiv neigbar montiert ist/sind.
